# EUROPEAN PATENT APPLICATION

(11) **EP 4 615 071 A1**
(43) Date of publication of application: **10.09.2025**
(21) Application number: 23884830.3
(22) Date of filing: 30.10.2023
(51) Int. Cl.: H04W 52/36

(54) **TRIGGERING METHOD FOR UE AUXILIARY INFORMATION REPORTING, APPARATUS, AND USER EQUIPMENT**

(30) Priority: 03.11.2022 CN 202211371937
(71) Applicant: Vivo Mobile Communication Co., Ltd., Dongguan, Guangdong 523863 (CN)
(72) Inventor: LIN, Zhipeng, Dongguan, Guangdong 523863 (CN); JIANG, Wei, Dongguan, Guangdong 523863 (CN); PAN, Xueming, Dongguan, Guangdong 523863 (CN); MO, Yitao, Dongguan, Guangdong 523863 (CN)
(74) Representative: Lavoix
(86) International application number: PCT/CN2023/127700
(87) International publication number: WO 2024/093900

(57) **Abstract**

Disclosed are a method and apparatus for triggering UE assistant information reporting, and user equipment, which belong to the technical field of communication. The method of an embodiment of the present application includes: determining, by UE, according to an assistant information triggering condition, that UE assistant information needs to be reported; and reporting, by the UE, the UE assistant information, where the UE assistant information includes at least one of the following: UE power headroom related information corresponding to a target waveform; maximum transmission power actually used by the UE; maximum transmission power not actually used by the UE; maximum transmission power corresponding to the target waveform; a maximum power reduction MPR; an MPR corresponding to the target waveform; an additional MPR; an additional MPR corresponding to the target waveform; a power management MPR; a power management MPR corresponding to the target waveform; a maximum power exposure MPE; and an MPE corresponding to the target waveform.

## Description

### CROSS-REFERENCE TO RELATED APPLICATIONS

The present application claims the priority to Chinese Patent Application No. 202211371937.0, filed in China on November 03, 2022, which is incorporated in its entirety herein by reference.

### TECHNICAL FIELD

The present application belongs to the technical field of communication, and particularly relates to a method and apparatus for trigging UE assistant information reporting, and user equipment.

### BACKGROUND

Waveform switching is a significant type of uplink enhancement technology. A terminal is able to select an appropriate waveform for transmission in a corresponding channel state condition through dynamic switching between a cyclic prefix orthogonal frequency division multiplexing (Cyclic Prefix Orthogonal Frequency Division Multiplexing, CP-OFDM) waveform and a discrete Fourier transform-spread orthogonal frequency division multiplexing (Discrete Fourier Transform-Spread Orthogonal Frequency Division Multiplexing, DFT-s-OFDM) waveform. In the related art, the waveform switching is semi-statically implemented, and can only enable transmission according to a waveform configuration in the related art without radio resource control (Radio Resource Control, RRC) re-configuration, resulting in a slow update rate and an incapability to effectively improve transmission performance.

In the related art, respective transmission waveforms of a common PUSCH and a PUSCH for transmitting a message 3 (i.e. an MSG3 in random access procedure) are configured through a physical uplink shared channel configuration (Physical Uplink Shared Channel-config, PUSCH-config) and a random access channel common configuration (Random Access Channel-ConfigCommon, RACH-ConfigCommon), and are updated only during reconfiguration of radio resource control (Radio Resource Control, RRC). Assuming that a PUSCH scheduled by downlink control information (Downlink Control Information, DCI) 0_0 is for MSG3 PUSCH transmission through the DFT-s-OFDM waveform, and a PUSCH scheduled by DCI 0_1 is for common PUSCH transmission through the CP-OFDM waveform. A type of potential waveform switching is likely to be implemented through different scheduling DCI. However, strictly speaking, the above mode is transmission of two types of PUSCHs of the same UE through different waveforms, and cannot be considered as the dynamic waveform switching.

In view of that, it is necessary to consider a mode of dynamically switching a waveform. Although the dynamic waveform switching itself is achievable through dynamic indication, if a network is only based on a difference between current uplink transmission power reported by a power headroom report (Power Headroom Report, PHR) in the related art and maximum transmission power of UE, it will be impossible to appropriately schedule user equipment (User Equipment, UE) uplink transmission resources or control UE uplink transmission power to maximize resource and power utilization efficiency.

### SUMMARY

A method and apparatus for triggering UE assistant information reporting, and user equipment are provided in embodiments of the present application, which can solve the problem of low resource and power utilization efficiency in a dynamic waveform switching scenario in the related art.

In a first aspect, a method for triggering user equipment UE assistant information reporting is provided. The method includes:
determining, by UE, according to an assistant information triggering condition, that the UE assistant information needs to be reported; and
reporting, by the UE, the UE assistant information, where the UE assistant information includes at least one of the following:
   UE power headroom related information corresponding to a target waveform;
   maximum transmission power actually used by the UE;
   maximum transmission power not actually used by the UE;
   maximum transmission power corresponding to the target waveform;
   a maximum power reduction MPR;
   an MPR corresponding to the target waveform;
   an additional MPR;
   an additional MPR corresponding to the target waveform;
   a power management MPR;
   a power management MPR corresponding to the target waveform;
   a maximum power exposure MPE; and
   an MPE corresponding to the target waveform.

In a second aspect, an apparatus for triggering user equipment UE assistant information reporting is provided. The apparatus includes:
a first determination module, used for determining, according to an assistant information triggering condition, that the UE assistant information needs to be reported; and
a first reporting module, used for reporting the UE assistant information, where the UE assistant information includes at least one of the following:
   UE power headroom related information corresponding to a target waveform;
   maximum transmission power actually used by the UE;
   maximum transmission power not actually used by the UE;
   maximum transmission power corresponding to the target waveform;
   a maximum power reduction MPR;
   an MPR corresponding to the target waveform;
   an additional MPR;
   an additional MPR corresponding to the target waveform;
   a power management MPR;
   a power management MPR corresponding to the target waveform;
   a maximum power exposure MPE; and
   an MPE corresponding to the target waveform.

In a third aspect, user equipment is provided. The user equipment includes a processor and a memory, where the memory stores a program or an instruction runnable on the processor, and the program or the instruction implements steps of the method according to the first aspect when executed by the processor.

In a fourth aspect, user equipment is provided. The user equipment includes a processor and a communication interface, where the processor is used for determining, according to an assistant information triggering condition, that the UE assistant information needs to be reported; and the communication interface is used for reporting the UE assistant information, where the UE assistant information includes at least one of the following:
UE power headroom related information corresponding to a target waveform;
maximum transmission power actually used by the UE;
maximum transmission power not actually used by the UE;
maximum transmission power corresponding to the target waveform;
a maximum power reduction MPR;
an MPR corresponding to the target waveform;
an additional MPR;
an additional MPR corresponding to the target waveform;
a power management MPR;
a power management MPR corresponding to the target waveform;
a maximum power exposure MPE; and
an MPE corresponding to the target waveform.

In a fifth aspect, a readable storage medium is provided. The readable storage medium stores a program or an instruction, where the program or the instruction implements steps of the method according to the first aspect when executed by a processor.

In a sixth aspect, a chip is provided. The chip includes a processor and a communication interface, where the communication interface is coupled to the processor, and the processor is used for running a program or an instruction to implement the method according to the first aspect.

In a seventh aspect, a computer program/program product is provided. The computer program/program product is stored in a storage medium, and the computer program/program product is executed by at least one processor to implement steps of the method according to the first aspect.

In the embodiment of the present application, in a case that the assistant information triggering condition is satisfied, it is determined that the UE assistant information needs to be reported, and the UE assistant information is reported to a network side. The network side can appropriately schedule UE uplink transmission resources or control UE uplink transmission power based on the UE assistant information reported by the UE in a case of dynamic beam switching for the UE through a dynamic signaling, so as to maximize resource and power utilization efficiency.

### BRIEF DESCRIPTION OF THE DRAWINGS

FIG. 1 is a block diagram of a wireless communication system to which an embodiment of the present application is applicable;
FIG. 2 is a schematic flow chart of a method for triggering UE assistant information reporting according to an embodiment of the present application;
FIG. 3 is a schematic structural diagram of an apparatus for triggering UE assistant information reporting according to an embodiment of the present application;
FIG. 4 is a schematic structural diagram of a communication device according to an embodiment of the present application; and
FIG. 5 is a schematic structural diagram of user equipment according to an embodiment of the present application.

### DETAILED DESCRIPTION

The technical solutions in the embodiments of the present application will be clearly described below in combination with the accompanying drawings in the embodiments of the present application. Apparently, the described embodiments are some examples rather than all embodiments of the present application. Based on the embodiments of the present application, all other embodiments obtained by those of ordinary skill in the art fall within the scope of protection of the present application.

The terms "first" and "second" in the description and claims of the present application are used to distinguish similar objects, and not unnecessarily used to describe a particular order or sequential order. It should be understood that the terms used in this way can be interchanged under appropriate circumstances such that the embodiments of the present application can be implemented in an order rather than those illustrated or described herein, objects distinguished by "first" and "second" are usually of the same category, and the number of the objects is not defined. For example, one or more first objects can be provided. Moreover, in the description and claims, "and/or" represents at least one of connected objects, and the character "/" generally indicates a "or" relationship between front and rear associated objects.

It is worth pointing out that a technology described in the embodiments of the present application is not limited to a long term evolution (Long Term Evolution, LTE)/LTE-advanced (LTE-Advanced, LTE-A) system, and may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the present application are usually interchangeably used, and the technology described may be applied to the systems and radio technologies mentioned above, or may be applied to other systems and radio technologies. The following description describes a new radio (New Radio, NR) system for illustration, NR terms are used in most of the following descriptions, but these technologies can be applied to applications apart from NR system applications, such as a 6^{th} generation (6^{th} Generation, 6G) communication system.

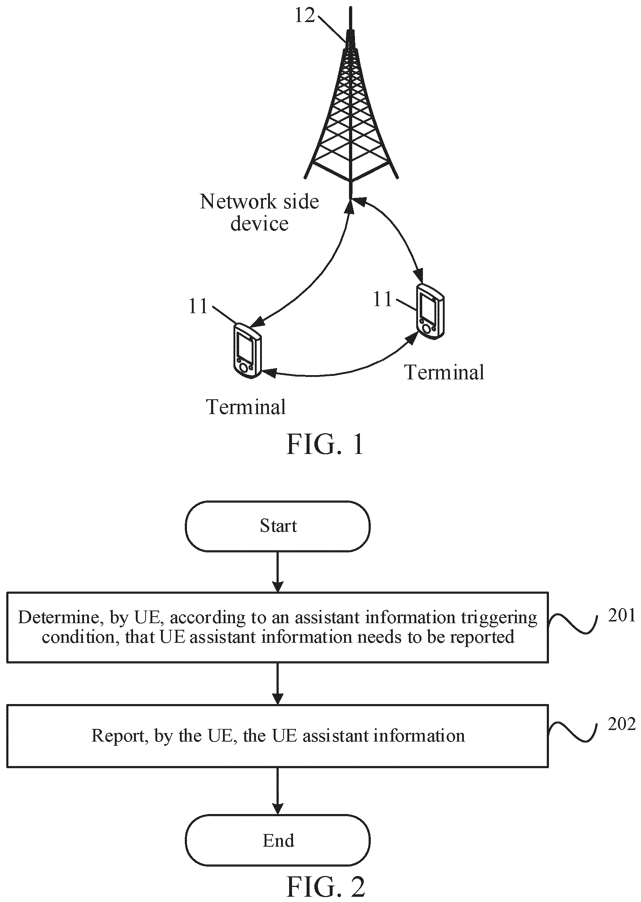

FIG. 1 shows a block diagram of a wireless communication system to which an embodiment of the present application is applicable. The wireless communications system includes a terminal 11 and a network side device 12. The terminal 11 may also be referred to as UE. The terminal 11 may be a mobile phone, a tablet personal computer (Tablet Personal Computer), a laptop computer (Laptop Computer), or a terminal side device referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (home devices having wireless communication functions, such as a refrigerator, a television, a washing machine and furniture), a game console, a personal computer (personal computer, PC), an automated teller machine, or a self-service machine. The wearable device includes: a smart watch, a smart band, a smart headset, smart glasses, smart j ewelry (a smart bracelet, a smart hand chain, a smart ring, a smart necklace, a smart bangle, a smart anklet, etc.), a smart wrist band, smart clothing, etc. It should be noted that a specific type of the terminal 11 is not limited in the embodiments of the present application. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, or a WiFi node. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission reception point (Transmission Reception Point, TRP), or some other suitable terms in the field, as long as the same technical effects are achieved. The base station is not limited to specific technical terms. It should be noted that in the embodiments of the present application, the base station in the NR system will be described only as an example and a specific type of the base station is not limited.

A method for triggering UE assistant information reporting according to an embodiment of the present application will be described in detail below in combination with the accompanying drawings and through some embodiments and application scenarios of the embodiments.

As shown in FIG. 2, a method for triggering user equipment UE assistant information reporting is provided in an embodiment of the present application. The method includes:
step 201, UE determines, according to an assistant information triggering condition, that UE assistant information needs to be reported; and
step 202, the UE reports the UE assistant information. The UE assistant information includes at least one of the following:
   UE power headroom related information corresponding to a target waveform;
   maximum transmission power actually used by the UE;
   maximum transmission power not actually used by the UE;
   maximum transmission power corresponding to the target waveform;
   a maximum power reduction (Allowed maximum power reduction, MPR);
   an MPR corresponding to the target waveform;
   an additional MPR (Additional Maximum Power Reduction, A-MPR);
   an additional MPR corresponding to the target waveform;
   a power management MPR (Power Management Maximum Power Reduction, P-MPR);
   a power management MPR corresponding to the target waveform;
   a maximum power exposure (Maximum Power Exposure, MPE); and
   an MPE corresponding to the target waveform.

In the embodiment of the present application, "UE power headroom related information corresponding to a target waveform" may be understood as: UE power headroom related information corresponding to uplink transmission using the target waveform, and may be specifically a difference between uplink transmission power of the uplink transmission using the target waveform and the maximum transmission power actually used by the UE.

In the embodiment of the present application, in a case of dynamic waveform switching, a network side can appropriately schedule UE uplink transmission resources or control UE uplink transmission power based on the UE assistant information reported by the UE, so as to maximize resource and power utilization efficiency.

As an optional embodiment, the target waveform includes at least one of the following:
a first waveform used by the UE before dynamic waveform switching;
a second waveform apart from the first waveform;
a third waveform corresponding to a power headroom report PHR; and
a fourth waveform apart from the third waveform.

As an optional embodiment, a type of the UE assistant information includes:
real assistant information obtained based on actual transmission of a terminal; and/or,
virtual assistant information obtained based on a reference format.

The UE assistant information whose type is the real assistant information may be referred to as: Real UE assistant information. The Real UE assistant information is UE assistant information obtained based on real transmission (real transmission), or is referred to as UE assistant information obtained based on actual transmission of the UE. The UE assistant information whose type is the virtual assistant information may be referred to as: Virtual UE assistant information. The Virtual UE assistant information is UE assistant information obtained based on a reference format (a reference format).

In at least one embodiment of the present application, the assistant information triggering condition includes at least one of the following:
the UE receives DCI for triggering the UE assistant information reporting;
the UE receives a medium access control control element (Medium Access Control Control Element, MAC CE) for triggering the UE assistant information reporting;
the UE is UE for which dynamic waveform switching is configured;
a waveform configured by a network for a message 3 is different from a waveform configured by the network for a UE-specific pilot; the message 3 is a message 3 in random access procedure;
a waveform used for first uplink transmission of the UE is different from a waveform used for second uplink transmission of the UE;
a periodic timer (pai-PeriodicTimer) of the UE assistant information times out;
a prohibit timer (pai-ProhibitTimer) of the UE assistant information times out; and
a power backoff variation corresponding to a target uplink carrier exceeds a UE assistant information power factor change.

For example, only a cell or UE for which dynamic waveform switching is configured may trigger the UE assistant information reporting. Or, only UE to which dynamic waveform switching is configured may simultaneously report the UE assistant information when a PHR reporting condition is satisfied. Other triggering conditions are not needed in the scenario.

For another example, when the waveform configured for the Msg3 is inconsistent with the waveform configured for the UE-specific pilot of the UE, the UE reports PHR related information determined under the waveform used by the UE-specific pilot, and further needs to report UE assistant information related to the waveform used by the Msg3.

Optionally, the first uplink transmission is current uplink transmission of the UE, and the second uplink transmission is previous uplink transmission closest to the current uplink transmission. Optionally, the first uplink transmission and/or the second uplink transmission may only refer to PUSCH transmission, and/or may include physical uplink control channel (Physical Uplink Control Channel, PUCCH) transmission.

For example, a waveform used for PUSCH transmission currently reporting PHR information is different from a waveform used for previous PUSCH transmission. The UE reports normal PHR information, and further needs to additionally report the UE assistant information. Otherwise, if the waveform used for the PUSCH transmission currently reporting the PHR information is the same as the waveform used for the previous PUSCH transmission, the UE may only report the normal PHR information.

As an optional embodiment, the DCI for triggering the UE assistant information reporting includes at least one of the following:
DCI for uplink scheduling;
DCI for downlink scheduling; and
DCI activating a configured grant physical uplink shared channel.
the DCI indicates triggering the UE assistant information reporting through at least one piece of the following information:
a target field, where the target field may be a newly added field, or an existing field may be multiplexed, which is not specifically limited herein;
search space (search space) used by the DCI;
a radio network temporary identifier (Radio Network Temporary Identifier, RNTI) for scrambling the DCI; and
a waveform indicated by the DCI, where the DCI is used for triggering the UE assistant information reporting in a case that the waveform indicated by the DCI is different from a waveform corresponding to power headroom report PHR reporting. For example, it implicitly indicates, based on whether the waveform indicated by the DCI or a change of the waveform is transformed to a waveform different from a waveform corresponding to a latest PHR reporting, that the DCI is used for triggering the UE assistant information reporting.

In another optional embodiment, in a dual connectivity DC or carrier aggregation CA scenario, the MAC CE used for triggering the UE assistant information reporting includes at least one of the following:
an MAC CE sent on a serving cell to which a PHR is sent;
an MAC CE sent on any serving cell; and
an MAC CE sent on a special cell sPcell.

Optionally, the UE simultaneously reports the UE assistant information when next and subsequent common PHR reporting conditions are satisfied in a case that the UE detects the MAC CE for triggering the UE assistant information reporting.

In the embodiment of the present application, a periodic timer (pai-PeriodicTimer) and/or a prohibit timer (pai-ProhibitTimer) are/is additionally configured, and are/is used for determining whether to report the UE assistant information, thereby flexibly controlling a granularity of the UE assistant information reporting, and avoiding signaling overhead caused by excessively frequent reporting.

Optionally, the method further includes:
the UE determines, according to a network configuration or a predefinition, information of the periodic timer of the UE assistant information and/or information of the prohibit timer of the UE assistant information;
   or,
the UE determines, according to a network configured timer scaling factor or a predefined timer scaling factor and information of a PHR periodic timer, information of the periodic timer of the UE assistant information.

For example, the following two parameters pai-PeriodicTimer and pai-ProhibitTimer used for determining time of information reporting of the UE assistant information (power assistant information, which may be referred as pai) may be configured in a PHR configuration IE (PHR-Config IE).

```
  PHR-Config ::= SEQUENCE {
  pai-PeriodicTimer ENUMERATED {sf10, sf20, sf50, sf100, sf200,sf500, sf1000,
  infinity },
  pai-ProhibitTimer ENUMERATED {sf0, sf10, sf20, sf50, sf100,sf200, sf500, sf1000},
```

Or, a reporting period of the UE assistant information is determined based on a reporting period of the PHR and an additionally introduced timer scaling factor (timer scaling factor). The timer scaling factor may be configured by a network or predefined. For example, the following parameter "pai-PeriodicTimerFactor" may be configured in the PHR-Config IE. A value obtained by multiplying the factor by a phr-PeriodicTimer is the reporting period of the UE assistant information, and is used for determining the time of the information reporting of the UE assistant information (power assistant information, which may be referred to as pai).

```
  PHR-Config ::= SEQUENCE {
  phr-PeriodicTimerFactor ENUMERATED {n1, n2, n4, n8},
  }
```

In another optional embodiment of the present application, a "UE assistant information power factor change (pai-Tx-PowerFactorChange)" is additionally configured or predefined, or a "variation threshold offset (variation threshold offset)" is additionally configured or predefined, and is used for determining whether to report the UE assistant information.

Optionally, the method further includes:
the UE determines a UE assistant information power factor change according to a network configuration or a predefinition;
   or,
the UE determines a UE assistant information power factor change according to a network configured variation threshold offset or a predefined variation threshold offset and PHR power factor change.

For example, the following pai-Tx-PowerFactorChange (UE assistant information power factor change) used for determining time of the UE assistant information reporting may be configured in the PHR-Config IE.

```
  PHR-Config ::= SEQUENCE {
  pai-Tx-PowerFactorChange ENUMERATED {dB1, dB3, dB6, infinity},
  }
```

In at least one embodiment of the present application, in a DC or CA scenario, the step that the UE reports the UE assistant information includes at least one of the following:
the UE sends the UE assistant information to a serving cell to which a PHR is sent, where for example, the UE assistant information may be sent along with the PHR;
the UE sends the UE assistant information to any serving cell, where optionally, the UE assistant information and the PHR do not necessarily need to be sent simultaneously;
the UE sends the UE assistant information to a special cell sPcell; and
the UE sends, in a case that the assistant information triggering condition is satisfied at a first moment, the UE assistant information to a cell in which a physical uplink shared channel that is closest to the first moment and that accommodates the UE assistant information is located.

Optionally, in a single-carrier scenario, the step that the UE reports the UE assistant information includes at least one of the following:
the UE sends, in a case that the assistant information triggering condition is satisfied at a second moment, the UE assistant information to a physical uplink shared channel that is closest to the second moment and that accommodates the UE assistant information;
the UE sends the UE assistant information along with an actually reported PHR; and
the UE sends the UE assistant information and an actually reported PHR separately.

Optionally, in a DC or CA scenario, the step that the UE reports the UE assistant information includes at least one of the following:
the UE sends the UE assistant information to a serving cell in which dynamic waveform switching is enabled; and
the UE sends the UE assistant information to a serving cell reporting real assistant information.

Optionally, in a case that two or more uplink carriers (UL carriers) are configured in one serving cell, for example, a supplementary uplink SUL is further configured based on a normal uplink NUL, the step that the UE reports the UE assistant information includes at least one of the following:
the UE sends the UE assistant information to an uplink on which the dynamic waveform switching is enabled;
the UE sends the UE assistant information along with an actually reported PHR;
the UE sends the UE assistant information in a case that the actually reported PHR is of a PHR type 1 (PHR Type 1), that is, the UE assistant information is reported only under the PHR corresponding to the PUSCH; and
the UE sends the UE assistant information based on CP-OFDM in a case that the actually reported PHR is of a PHR type 3 (PHR Type 3), where the PHR Type 3 is a PHR determined based on a DFT-s-OFDM.

As an optional embodiment, in a case that one piece of DCI schedules physical uplink shared channel PUSCH transmission of a plurality of cells, the method further includes:
the UE reports the UE assistant information to the plurality of cells; or, the UE does not report the UE assistant information to the plurality of cells. In other words, in a case that one piece of DCI schedules PUSCH transmission of the plurality of cells, all of the plurality of cells report the UE assistant information, or none of the plurality of cells reports the UE assistant information.

In at least one embodiment of the present application, a transmission priority of the UE assistant information is the same as a transmission priority of the PHR;
or, a transmission priority of the UE assistant information is lower than a transmission priority of the PHR. For example, the UE only sends PHR information when only one type of the UE assistant information and the PHR is sent. This may be referred to as that the UE preferentially transmits information of a high priority.

In conclusion, in the embodiment of the present application, in a case that the assistant information triggering condition is satisfied, it is determined that the UE assistant information needs to be reported, and the UE assistant information is reported to a network side. The network side can appropriately schedule UE uplink transmission resources or control UE uplink transmission power based on the UE assistant information reported by the UE in a case of dynamic beam switching for the UE through a dynamic signaling, so as to maximize resource and power utilization efficiency.

In the method for triggering UE assistant information reporting according to the embodiment of the present application, an execution body may be an apparatus for triggering UE assistant information reporting. The apparatus for triggering UE assistant information reporting according to an embodiment of the present application will be described by taking the apparatus for triggering UE assistant information reporting executing the method for triggering UE assistant information reporting as an example in the embodiment of the present application.

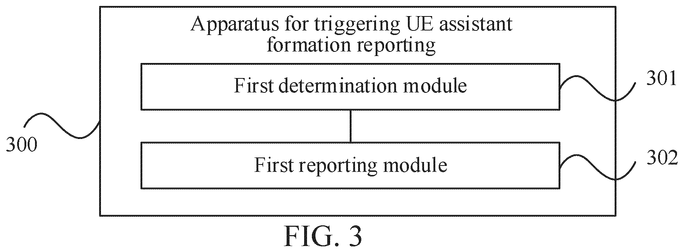

As shown in FIG. 3, an apparatus 300 for triggering user equipment UE assistant information reporting includes:
a first determination module 301, used for determining, according to an assistant information triggering condition, that the UE assistant information needs to be reported; and
a first reporting module 302, used for reporting the UE assistant information, where the UE assistant information includes at least one of the following:
   UE power headroom related information corresponding to a target waveform;
   maximum transmission power actually used by the UE;
   maximum transmission power not actually used by the UE;
   maximum transmission power corresponding to the target waveform;
   a maximum power reduction MPR;
   an MPR corresponding to the target waveform;
   an additional MPR;
   an additional MPR corresponding to the target waveform;
   a power management MPR;
   a power management MPR corresponding to the target waveform;
   a maximum power exposure MPE; and
   an MPE corresponding to the target waveform.

As an optional embodiment, the target waveform includes at least one of the following:
a first waveform used by the UE before dynamic waveform switching;
a second waveform apart from the first waveform;
a third waveform corresponding to a power headroom report PHR; and
a fourth waveform apart from the third waveform.

As an optional embodiment, a type of the UE assistant information includes:
real assistant information obtained based on actual transmission of a terminal; and/or,
virtual assistant information obtained based on a reference format.

As an optional embodiment, the assistant information triggering condition includes at least one of the following:
the UE receives downlink control information DCI for triggering the UE assistant information reporting;
the UE receives a medium access control control element MAC CE for triggering the UE assistant information reporting;
the UE is UE for which dynamic waveform switching is configured;
a waveform configured by a network for a message 3 is different from a waveform configured by the network for a UE-specific pilot; the message 3 is a message 3 in random access procedure;
a waveform used for first uplink transmission of the UE is different from a waveform used for second uplink transmission of the UE;
a periodic timer of the UE assistant information times out;
a prohibit timer of the UE assistant information times out; and
a power backoff variation corresponding to a target uplink carrier exceeds a UE assistant information power factor change.

As an optional embodiment, the DCI for triggering the UE assistant information reporting includes at least one of the following:
DCI for uplink scheduling;
DCI for downlink scheduling; and
DCI activating a configured grant physical uplink shared channel.

As an optional embodiment, the DCI triggers the UE assistant information reporting through at least one piece of the following information:
a target field;
search space used by the DCI;
a radio network temporary identifier RNTI for scrambling the DCI; and
a waveform indicated by the DCI, where the DCI is used for triggering the UE assistant information reporting in a case that the waveform indicated by the DCI is different from a waveform corresponding to power headroom report PHR reporting.

As an optional embodiment, the MAC CE for triggering the UE assistant information reporting includes at least one of the following:
an MAC CE sent on a serving cell to which a PHR is sent;
an MAC CE sent on any serving cell; and
an MAC CE sent on a special cell sPcell.

As an optional embodiment, the apparatus further includes:
a second determination module, used for determining, according to a network configuration or a predefinition, information of the periodic timer of the UE assistant information and/or information of the prohibit timer of the UE assistant information;
   or,
a third determination module, used for determining, according to a network configured timer scaling factor or a predefined timer scaling factor and information of a PHR periodic timer, information of the periodic timer of the UE assistant information.

As an optional embodiment, the apparatus further includes:
a fourth determination module, used for determining a UE assistant information power factor change according to a network configuration or a predefinition;
   or,
a fifth determination module, used for determining a UE assistant information power factor change according to a network configured variation threshold offset or a predefined variation threshold offset and PHR power factor change.

As an optional embodiment, the first reporting module is further used for executing at least one of the following:
sending the UE assistant information to a serving cell to which a PHR is sent;
sending the UE assistant information to any serving cell;
sending the UE assistant information to a special cell sPcell;
sending, in a case that the assistant information triggering condition is satisfied at a first moment, the UE assistant information to a cell in which a physical uplink shared channel that is closest to the first moment and that accommodates the UE assistant information is located;
sending the UE assistant information to a serving cell in which dynamic waveform switching is enabled;
sending the UE assistant information to a serving cell reporting real assistant information;
sending the UE assistant information to an uplink on which the dynamic waveform switching is enabled;
sending the UE assistant information along with an actually reported PHR;
sending the UE assistant information in a case that the actually reported PHR is of a PHR type 1; and
sending the UE assistant information based on CP-OFDM in a case that the actually reported PHR is of a PHR type 3.

As an optional embodiment, in a case that one piece of DCI schedules physical uplink shared channel PUSCH transmission of a plurality of cells,
the UE reports the UE assistant information to the plurality of cells;
   or,
the UE does not report the UE assistant information to the plurality of cells.

As an optional embodiment, a transmission priority of the UE assistant information is the same as a transmission priority of the PHR;
or,
a transmission priority of the UE assistant information is lower than a transmission priority of the PHR.

In the embodiment of the present application, in a case that the assistant information triggering condition is satisfied, it is determined that the UE assistant information needs to be reported, and the UE assistant information is reported to a network side. The network side can appropriately schedule UE uplink transmission resources or control UE uplink transmission power based on the UE assistant information reported by the UE in a case of dynamic beam switching for the UE through a dynamic signaling, so as to maximize resource and power utilization efficiency.

It should be noted that the apparatus according to the embodiment of the present application is an apparatus capable of executing the above method for triggering UE assistant information reporting. Thus, all embodiments of the above method for triggering UE assistant information reporting are applicable to the apparatus, and can achieve the same or similar beneficial effects, which are not described herein.

The apparatus for triggering UE assistant information reporting in the embodiment of the present application may be an electronic device, such as an electronic device having an operating system, or a component in the electronic device, such as an integrated circuit or a chip. The electronic device may be a terminal or another device apart from the terminal. Illustratively, the terminal may include, but not limited to, the terminal 11 of a type listed above, and another device may be a server, a network attached storage (Network Attached Storage, NAS), etc., which is not specifically limited in the embodiment of the present application.

The apparatus for triggering UE assistant information reporting according to the embodiment of the present application can implement each process implemented by the method embodiment of FIG. 2 and achieve the same technical effects, which are not described herein to avoid repetition.

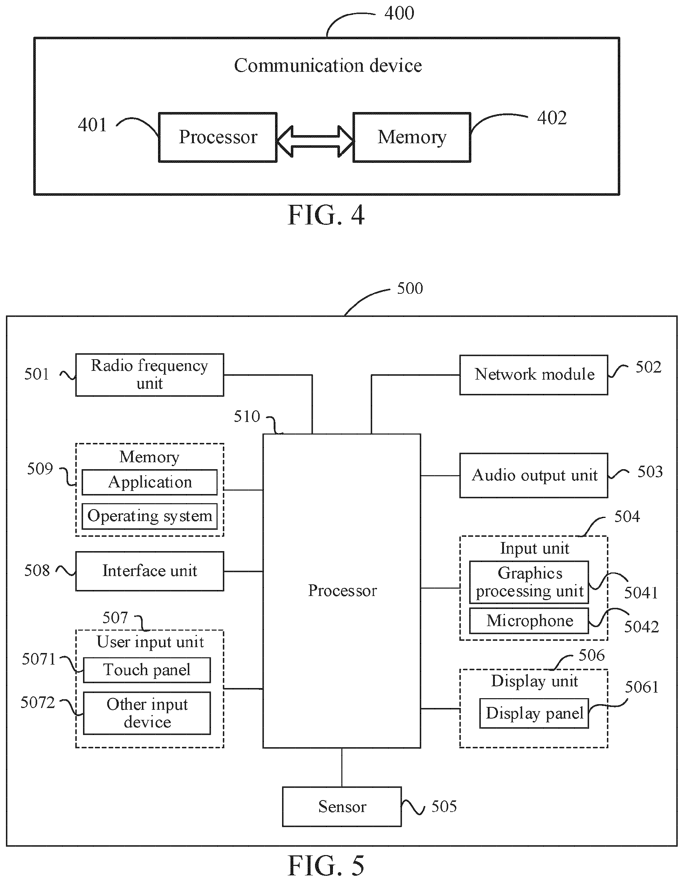

Optionally, as shown in FIG. 4, a communication device 400 is further provided in an embodiment of the present application. The communication device includes a processor 401 and a memory 402. The memory 402 stores a program or an instruction runnable on the processor 401. For example, when the communication device 400 is user equipment, the program or the instruction implements each step of the method embodiment for triggering UE assistant information reporting when executed by the processor 401, and can achieve the same technical effects, which are not described herein to avoid repetition.

User equipment is further provided in an embodiment of the present application. The user equipment includes a processor and a communication interface. The processor is used for determining, according to an assistant information triggering condition, that the UE assistant information needs to be reported; and the UE reports the UE assistant information, where the UE assistant information includes at least one of the following: UE power headroom related information corresponding to a target waveform; maximum transmission power actually used by the UE; maximum transmission power not actually used by the UE; maximum transmission power corresponding to the target waveform; a maximum power reduction MPR; an MPR corresponding to the target waveform; an additional MPR; an additional MPR corresponding to the target waveform; a power management MPR; a power management MPR corresponding to the target waveform; a maximum power exposure MPE; and an MPE corresponding to the target waveform. The user equipment embodiment corresponds to the above user equipment side method embodiment, and each implementation process and implementation of the above method embodiment are applicable to the embodiment of the user equipment, and can achieve the same technical effects. Specifically, FIG. 5 is a schematic diagram of a hardware structure of user equipment of an embodiment of the present application.

The user equipment 500 includes, but not limited to: at least some of a radio frequency unit 501, a network module 502, an audio output unit 503, an input unit 504, a sensor 505, a display unit 506, a user input unit 507, an interface unit 508, a memory 509 and a processor 510.

Those skilled in the art may understand that the user equipment 500 may further include a power supply (such as a battery) that supplies power to the components. The power supply may be logically connected to the processor 510 through a power management system, thereby implementing functions such as management of charging, discharging and power consumption through the power management system. A structure of the user equipment shown in FIG. 5 does not constitute limitations to the user equipment. The user equipment may include more or fewer components than those shown in the figure, some combined components, or different component arrangements, which are not described herein.

It should be understood that in the embodiment of the present application, the input unit 504 may include a graphics processing unit (Graphics Processing Unit, GPU) 5041 and a microphone 5042. The graphics processing unit 5041 processes image data of still pictures or videos obtained by an image capture apparatus (for example, a camera) in a video capture mode or an image capture mode. The display unit 506 may include a display panel 5061. The display panel 5061 may be configured in a form of a liquid crystal display, an organic light-emitting diode, etc. The user input unit 507 includes at least one of a touch panel 5071 and another input device 5072. The touch panel 5071 is also referred to as a touch screen. The touch panel 5071 may include a touch detection apparatus and a touch controller. The another input device 5072 may include, but not limited to, a physical keyboard, a function key (for example, a volume control key and a switch key), a trackball, a mouse and a joystick, which are not described herein.

In the embodiment of the present application, after receiving downlink data from a network side device, the radio frequency unit 501 may transmit the downlink data to the processor 510 for processing. Moreover, the radio frequency unit 501 may send uplink data to the network side device. Generally, the radio frequency unit 501 includes, but not limited to, an antenna, an amplifier, a transceiver, a coupler, a low noise amplifier, a duplexer, etc.

The memory 509 may be used for storing software programs or instructions and various data. The memory 509 may mainly include a first storage area storing the programs or the instructions and a second storage area storing data. The first storage area may store an operating system, application programs or instructions required for at least one function (for example, a sound playback function, and an image display function), etc. Moreover, the memory 509 may include a volatile memory or a non-volatile memory, or the memory 509 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 509 in the embodiment of the present application includes, but not limited to, these memories and any other memory of a suitable type.

The processor 510 may include one or more processing units. Optionally, the processor 510 integrates an application processor and a modem processor. The application processor mainly processes operations involving an operating system, a user interface, an application program, etc., and the modem processor mainly processes a wireless communication signal, for example, a baseband processor. It may be understood that the above modem processor may not be integrated into the processor 510.

The processor 510 is used for determining, according to an assistant information triggering condition, that the UE assistant information needs to be reported; and

the radio frequency unit 501 is further used for reporting the UE assistant information, where the UE assistant information includes at least one of the following: UE power headroom related information corresponding to a target waveform; maximum transmission power actually used by the UE; maximum transmission power not actually used by the UE; maximum transmission power corresponding to the target waveform; a maximum power reduction MPR; an MPR corresponding to the target waveform; an additional MPR; an additional MPR corresponding to the target waveform; a power management MPR; a power management MPR corresponding to the target waveform; a maximum power exposure MPE; and an MPE corresponding to the target waveform.

In the embodiment of the present application, in a case that the assistant information triggering condition is satisfied, it is determined that the UE assistant information needs to be reported, and the UE assistant information is reported to a network side. The network side can appropriately schedule UE uplink transmission resources or control UE uplink transmission power based on the UE assistant information reported by the UE in a case of dynamic beam switching for the UE through a dynamic signaling, so as to maximize resource and power utilization efficiency.

It should be noted that the user equipment according to the embodiment of the present application is user equipment capable of executing the above method for triggering UE assistant information reporting. Thus, all embodiments of the above method for triggering UE assistant information reporting are applicable to the user equipment, and can achieve the same or similar beneficial effects, which are not described herein.

A readable storage medium is further provided in an embodiment of the present application. The readable storage medium stores a program or an instruction, where the program or the instruction implements each process of the above method embodiment for triggering UE assistant information reporting when executed by a processor, and can achieve the same technical effects, which are not described herein to avoid repetition.

The processor is a processor in user equipment in the above embodiment. The readable storage medium includes a computer-readable storage medium, for example, a computer read-only memory ROM, a random-access memory RAM, a magnetic disk, an optical disk, etc.

A chip is additionally provided in an embodiment of the present application. The chip includes a processor and a communication interface, where the communication interface is coupled to the processor, and the processor is used for running a program or an instruction to implement each process of the method embodiment for triggering UE assistant information reporting, and can achieve the same technical effects, which are not described herein to avoid repetition.

It should be understood that the chip mentioned in the embodiment of the present application may be further referred to as a system-level chip, a system chip, a chip system or a system on a chip.

A computer program/program product is additionally provided in an embodiment of the present application. The computer program/program product is stored in a storage medium. The computer program/program product is executed by at least one processor to implement each process of the above method embodiment for triggering UE assistant information reporting, and can achieve the same technical effects, which are not described herein to avoid repetition.

It should be noted that the terms "comprise", "include", or their any other variations herein are intended to cover non-exclusive inclusions, such that a process, a method, an article, or an apparatus that includes a series of elements not only includes those elements, but also includes other elements not explicitly listed, or further includes elements inherent to the process, method, article, or apparatus. Without more restrictions, the elements defined by the sentences "comprise a ..." or "include a ..." do not exclude existence of other identical elements in the process, the method, the article, or the apparatus that includes the elements. Moreover, it should be noted that the scope of the method and apparatus in the implementation of the present application is not limited to execution of functions in the order shown or discussed, and may further include execution of functions in a substantially concurrent manner or in reverse order according to the functions involved, for example, the method described can be executed in an order different from that described, and various steps can be further added, omitted or combined. Moreover, features described with reference to some examples can be combined in other examples.

From the description of the above implementations, it will be apparent to those skilled in the art that the method of the above embodiment can be implemented through software plus a necessary general-purpose hardware platform, or may be implemented through hardware certainly, but the former is a better implementation in many cases. With such understanding, the technical solution of the present application, in essence or from the view of part contributing to the related art, can be embodied in the form of a computer software product, where the computer software product is stored in a memory medium (such as ROM/RAM, a magnetic disk and an optical disk) and includes several instructions used for making a terminal (which can be a mobile phone, a computer, a server, an air conditioner, or a network device) execute the method of each embodiment of the present application.

The embodiments of the present application are described above in combination with the accompanying drawings, but the present application is not limited to the above specific implementations. The above specific implementations are only illustrative rather than restrictive. With the inspiration of the present application, those of ordinary skill in the art can further make various forms without departing from the objective of the present application and the protection scope of the claims. Those forms fall within the protection of the present application.

## Claims

1. A method for triggering user equipment UE assistant information reporting, comprising:
determining, by UE, according to an assistant information triggering condition, that the UE assistant information needs to be reported; and
reporting, by the UE, the UE assistant information, wherein the UE assistant information comprises at least one of the following:
UE power headroom related information corresponding to a target waveform;
maximum transmission power actually used by the UE;
maximum transmission power not actually used by the UE;
maximum transmission power corresponding to the target waveform;
a maximum power reduction MPR;
an MPR corresponding to the target waveform;
an additional MPR;
an additional MPR corresponding to the target waveform;
a power management MPR;
a power management MPR corresponding to the target waveform;
a maximum power exposure MPE; and
an MPE corresponding to the target waveform.

2. The method according to claim 1, wherein the target waveform comprises at least one of the following:
a first waveform used by the UE before dynamic waveform switching;
a second waveform apart from the first waveform;
a third waveform corresponding to a power headroom report PHR; and
a fourth waveform apart from the third waveform.

3. The method according to claim 1, wherein a type of the UE assistant information comprises:
real assistant information obtained based on actual transmission of a terminal; and/or,
virtual assistant information obtained based on a reference format.

4. The method according to claim 1, wherein the assistant information triggering condition comprises at least one of the following:
the UE receives downlink control information DCI for triggering the UE assistant information reporting;
the UE receives a medium access control control element MAC CE for triggering the UE assistant information reporting;
the UE is UE for which dynamic waveform switching is configured;
a waveform configured by a network for a message 3 is different from a waveform configured by the network for a UE-specific pilot; the message 3 is a message 3 in random access procedure;
a waveform used for first uplink transmission of the UE is different from a waveform used for second uplink transmission of the UE;
a periodic timer of the UE assistant information times out;
a prohibit timer of the UE assistant information times out; and
a power backoff variation corresponding to a target uplink carrier exceeds a UE assistant information power factor change.

5. The method according to claim 4, wherein the DCI for triggering the UE assistant information reporting comprises at least one of the following:
DCI for uplink scheduling;
DCI for downlink scheduling; and
DCI activating a configured grant physical uplink shared channel.

6. The method according to claim 4, wherein the DCI triggers the UE assistant information reporting through at least one piece of the following information:
a target field;
search space used by the DCI;
a radio network temporary identifier RNTI for scrambling the DCI; and
a waveform indicated by the DCI, wherein the DCI is used for triggering the UE assistant information reporting in a case that the waveform indicated by the DCI is different from a waveform corresponding to power headroom report PHR reporting.

7. The method according to claim 4, wherein the MAC CE for triggering the UE assistant information reporting comprises at least one of the following:
an MAC CE sent on a serving cell to which a PHR is sent;
an MAC CE sent on any serving cell; and
an MAC CE sent on a special cell sPcell.

8. The method according to claim 4, further comprising:
determining, by the UE according to a network configuration or a predefinition, information of the periodic timer of the UE assistant information and/or information of the prohibit timer of the UE assistant information;
or,
determining, by the UE according to a network configured timer scaling factor or a predefined timer scaling factor and information of a PHR periodic timer, information of the periodic timer of the UE assistant information.

9. The method according to claim 4, further comprising:
determining, by the UE, a UE assistant information power factor change according to a network configuration or a predefinition;
or,
determining, by the UE, a UE assistant information power factor change according to a network configured variation threshold offset or a predefined variation threshold offset and a PHR power factor change.

10. The method according to claim 1, wherein the reporting, by the UE, the UE assistant information comprises at least one of the following:
sending, by the UE, the UE assistant information to a serving cell to which a PHR is sent;
sending, by the UE, the UE assistant information to any serving cell;
sending, by the UE, the UE assistant information to a special cell sPcell;
sending, by the UE in a case that the assistant information triggering condition is satisfied at a first moment, the UE assistant information to a cell in which a physical uplink shared channel that is closest to the first moment and that accommodates the UE assistant information is located;
sending, by the UE, the UE assistant information to a serving cell in which dynamic waveform switching is enabled;
sending, by the UE, the UE assistant information to a serving cell reporting real assistant information;
sending, by the UE, the UE assistant information to an uplink on which the dynamic waveform switching is enabled;
sending, by the UE, the UE assistant information along with an actually reported PHR;
sending, by the UE, the UE assistant information in a case that the actually reported PHR is of a PHR type 1; and
sending, by the UE, the UE assistant information based on CP-OFDM in a case that the actually reported PHR is of a PHR type 3.

11. The method according to any one of claims 1-9, wherein in a case that one piece of DCI schedules physical uplink shared channel PUSCH transmission of a plurality of cells, the method further comprises:
reporting, by the UE, the UE assistant information to the plurality of cells;
or,
not reporting, by the UE, the UE assistant information to the plurality of cells.

12. The method according to any one of claims 1-9, wherein a transmission priority of the UE assistant information is the same as a transmission priority of the PHR;
or,
a transmission priority of the UE assistant information is lower than a transmission priority of the PHR.

13. An apparatus for triggering user equipment UE assistant information reporting, comprising:
a first determination module, used for determining, according to an assistant information triggering condition, that the UE assistant information needs to be reported; and
a first reporting module, used for reporting the UE assistant information, wherein the UE assistant information comprises at least one of the following:
UE power headroom related information corresponding to a target waveform;
maximum transmission power actually used by the UE;
maximum transmission power not actually used by the UE;
maximum transmission power corresponding to the target waveform;
a maximum power reduction MPR;
an MPR corresponding to the target waveform;
an additional MPR;
an additional MPR corresponding to the target waveform;
a power management MPR;
a power management MPR corresponding to the target waveform;
a maximum power exposure MPE; and
an MPE corresponding to the target waveform.

14. The apparatus according to claim 13, wherein the target waveform comprises at least one of the following:
a first waveform used by the UE before dynamic waveform switching;
a second waveform apart from the first waveform;
a third waveform corresponding to a power headroom report PHR; and
a fourth waveform apart from the third waveform.

15. The apparatus according to claim 13, wherein a type of the UE assistant information comprises:
real assistant information obtained based on actual transmission of a terminal; and/or,
virtual assistant information obtained based on a reference format.

16. The apparatus according to claim 13, wherein the assistant information triggering condition comprises at least one of the following:
the UE receives downlink control information DCI for triggering the UE assistant information reporting;
the UE receives a medium access control control element MAC CE for triggering the UE assistant information reporting;
the UE is UE for which dynamic waveform switching is configured;
a waveform configured by a network for a message 3 is different from a waveform configured by the network for a UE-specific pilot; the message 3 is a message 3 in random access procedure;
a waveform used for first uplink transmission of the UE is different from a waveform used for second uplink transmission of the UE;
a periodic timer of the UE assistant information times out;
a prohibit timer of the UE assistant information times out; and
a power backoff variation corresponding to a target uplink carrier exceeds a UE assistant information power factor change.

17. The apparatus according to claim 16, wherein the DCI for triggering the UE assistant information reporting comprises at least one of the following:
DCI for uplink scheduling;
DCI for downlink scheduling; and
DCI activating a configured grant physical uplink shared channel.

18. The apparatus according to claim 16, wherein the DCI triggers the UE assistant information reporting through at least one piece of the following information:
a target field;
search space used by the DCI;
a radio network temporary identifier RNTI for scrambling the DCI; and
a waveform indicated by the DCI, wherein the DCI is used for triggering the UE assistant information reporting in a case that the waveform indicated by the DCI is different from a waveform corresponding to power headroom report PHR reporting.

19. The apparatus according to claim 16, wherein the MAC CE for triggering the UE assistant information reporting comprises at least one of the following:
an MAC CE sent on a serving cell to which a PHR is sent;
an MAC CE sent on any serving cell; and
an MAC CE sent on a special cell sPcell.

20. The apparatus according to claim 16, further comprising:
a second determination module, used for determining, according to a network configuration or a predefinition, information of the periodic timer of the UE assistant information and/or information of the prohibit timer of the UE assistant information;
or,
a third determination module, used for determining, according to a network configured timer scaling factor or a predefined timer scaling factor and information of a PHR periodic timer, information of the periodic timer of the UE assistant information.

21. The apparatus according to claim 16, further comprising:
a fourth determination module, used for determining a UE assistant information power factor change according to a network configuration or a predefinition;
or,
a fifth determination module, used for determining a UE assistant information power factor change according to a network configured variation threshold offset or a predefined variation threshold offset and PHR power factor change.

22. The apparatus according to claim 13, wherein the first reporting module is further used for executing at least one of the following:
sending the UE assistant information to a serving cell to which a PHR is sent;
sending the UE assistant information to any serving cell;
sending the UE assistant information to a special cell sPcell;
sending, in a case that the assistant information triggering condition is satisfied at a first moment, the UE assistant information to a cell in which a physical uplink shared channel that is closest to the first moment and that accommodates the UE assistant information is located;
sending the UE assistant information to a serving cell in which dynamic waveform switching is enabled;
sending the UE assistant information to a serving cell reporting real assistant information;
sending the UE assistant information to an uplink on which the dynamic waveform switching is enabled;
sending the UE assistant information along with an actually reported PHR;
sending the UE assistant information in a case that the actually reported PHR is of a PHR type 1; and
sending the UE assistant information based on CP-OFDM in a case that the actually reported PHR is of a PHR type 3.

23. The apparatus according to any one of claims 13-21, wherein in a case that one piece of DCI schedules physical uplink shared channel PUSCH transmission of a plurality of cells,
the UE reports the UE assistant information to the plurality of cells;
or,
the UE does not report the UE assistant information to the plurality of cells.

24. The apparatus according to any one of claims 13-21, wherein a transmission priority of the UE assistant information is the same as a transmission priority of the PHR;
or,
a transmission priority of the UE assistant information is lower than a transmission priority of the PHR.

25. User equipment, comprising a processor and a memory, wherein the memory stores a program or an instruction runnable on the processor, and the program or the instruction implements steps of the method for triggering UE assistant information reporting according to any one of claims 1-12 when executed by the processor.

26. A readable storage medium, storing a program or an instruction, wherein the program or the instruction implements steps of the method for triggering UE assistant information reporting according to any one of claims 1-12 when executed by a processor.
